# EUROPEAN PATENT APPLICATION

(11) **EP 0 547 622 A2**
(43) Date of publication of application: **23.06.1993**
(21) Application number: 92121576.0
(22) Date of filing: 18.12.1992
(51) Int. Cl.: G06F 15/419, G06F 15/403

(54) **Graphic processing system**

(30) Priority: 18.12.1991 JP 353042/91
(71) Applicant: HITACHI SOFTWARE ENGINEERING CO., LTD., Yokohama-shi, Kanagawa-Ken (JP)
(72) Inventor: Nakanishi, Go, Shinjuku-ku, Tokyo (JP); Takasaki, Naruto, Totsuka-ku, Yokohama-shi, Kanagawa-ken (JP); Tanaka, Yutaka, Yokohama-shi, Kanagawa-ken (JP)
(74) Representative: Patentanwälte Beetz - Timpe - Siegfried Schmitt-Fumian - Mayr

(57) **Abstract**

A graphic processing system for processing a graphic is provided with graphic processing means for operating and editing graphical image data and vector graphic data, which are displayed in a superimposed manner. The card type data processing means is provided in the command library, which is arranged by configuring the card type database with graphical images and text, searching for the card type data, and displaying the card type data. The operating and editing processing for operating and editing the card type data is implemented, together with the graphic processing, through the command library. The graphic processing system can manage each data as the card type data through the card type data processing means, it can make the graphic processing more efficient, and productivity of the card type data can be improved.

## Description

### BACKGROUND OF THE INVENTION

### 1. Field of the Invention

The present invention relates to a graphic processing system capable of performing graphic processing together with graphical image processing and, more particularly, to a graphic processing system with card type data processing functions for implementing the processing of card type data, including a searching and displaying function for searching and displaying the card type data, a cutting and pasting function for cutting off displayed data such as a drawing and pasting up the cut data on a card, and an allocating function for allocating graphic processing commands to the card as a menu, the graphic processing system being so arranged as for the user to readily alter a system interface so as to suit the needs or preference of its own business by itself and to efficiently implement the management of data such as vector data, graphical image data, components data, and so on.

### 2. Description of the Related Art

The graphic processing system generally allows the user to grasp a state of the management of drawings files, components files, and so on, manipulated on its business, by presenting the relationship of data in each file with text. The user can further manage the data so as to adapt it to its own business. Techniques of representing the data may include, for example, card type data display systems which are referred to as a hypertext system and a multimedia database system, for example, as disclosed in Japanese Patent Laid-open Publication (kokai) Nos. 3-149,634, 3-34,067, and 3-51,961.

The hypertext system has a data structure in which related data is linked together in a network form through link data by embedding the link data specifying other data in screen display data as a button region. Each of the data linked together in such a network form is adapted to position the cursor of a mouse in the button region embedded in the screen display data and to follow the data of each network one after another by producing a mouse click. The card type data display system allows the user to store data in an effective way and improve efficiency in operations of the system.

The card type data display systems on the basis of such conventional techniques as described herein-above, however, present problems as will be described hereinafter, when the user intends to manage data to be manipulated with a graphic processing system.

1. The conventional systems suffer from the disadvantage that the user feels it difficult to understand data such as drawings, components, and so on, manipulated with the graphic processing system, when the data is represented with text only. In this case, even if the graphic processing system would be employed in combination with any conventional card type data display system, this combination places a limit upon the functions of the two systems and the method of operation is limited. When either one of the conventional card type data display systems is employed together with the graphic processing system, the data, such as drawings, components, and so on, registered in the card, can be displayed by displaying the card on a display screen; however, in this case, it is impossible to operate commands for operating and editing vector graphic data and graphical image data through the card so as to adapt the data to the needs or preference of the user's own business because each of the systems is independent from the other.
2. Further, the conventional card type data display systems cannot fetch data directly from the screen on which the graphic processing system is being operated when the data such as drawings, components, and so on, are to be registered in the card. It is thus difficult to register such data in the card through the conventional card type data display systems.
3. When drawings are intended to be employed on business in order to describe or explain products, it is frequently necessary to display data relating to each of the graphics disposed on the display screen manipulated with the system; hence, in this case, description data or the like is added to each of the graphics as an attribute. Further, the conventional systems place the limit upon the quantity and the configuration of data to be given so that it is necessary to associate each of the graphics with the card in which the related data is registered; however, it is impossible whatsoever to manage the data relating to each of the graphics on the drawing in association with the card.
4. The conventional card type data display systems request the database designer to manage data files with plural directories in accordance with the kind of data. When the system is designed in such a way, however, the user is also requested to use the database with the locations of the data files kept in mind when the user intends to make reference to the data files, even if the user would be less knowledgeable about the system itself. Hence, the conventional card type data display systems present the problem that the user cannot make ready reference to the data files.
5. Further, the conventional systems suffer from the disadvantage that the user feels difficult to adapt user commands for manipulating vector drawings, graphical images, software components, and so on, which can be operated on the graphic processing system as well as for manipulating the card type data, to the needs or preference of the user's own business.

### SUMMARY OF THE INVENTION

The present invention has been accomplished in order to solve the problems presented by the conventional technology as described hereinabove and it has the object to provide a graphic processing system so adapted as to operate and edit vector data and graphical image data, which is provided with functions, such as a function of making access to card type data files and a function of displaying and presenting contents of the card, and as to manage each of the data as card type data. The graphic processing system according to the present invention serves as making graphic processing more efficient and improving productivity.

In order to achieve the aforesaid object, the present invention consists of a graphic processing system for performing graphic processing, having a graphical image memory for storing graphical image data; a data memory for storing vector graphic data; a display unit for displaying the vector graphic data and the graphical image data; and an input device for providing an instruction to operate and edit a vector graphic and a graphical image, said graphic processing system comprising: a graphic processing means for displaying the graphical image data and the vector graphic data in a superimposed manner and for operating and editing the graphical image data and the vector graphic data in a command library; a card type data processing means for designing a card type data of a card type database composed of a graphical image and text, for searching the card type data and for displaying the card type data in the command library; and wherein the graphic processing is implemented in combination with the operating and editing processing for operating and editing the card type data through the processing means equipped in the command library.

The graphic processing system in accordance with the present invention is provided with the graphic processing means for displaying the graphical image data and the vector graphic data in a superimposed manner and for operating and editing the graphical image data and the vector graphic data in the command library. This graphic processing system so adapted as to implement the graphic processing through the command library efficiently is a basic system of the present invention, so that the graphic processing system according to the present invention is provided with the graphical image memory for storing the graphical image data, the data memory for storing the vector graphic data, the display unit for displaying the vector graphic data and the graphical image data, and the input device for presenting the instruction for operating and editing the vector graphics and the graphical images, as system elements. The graphic processing system is further provided with the card type data processing means as a processing means of the command library. This card type data processing means allows the card type database to be configured with the graphical image and text, the card type data to be searched, and the card type data to be displayed. Hence, the arrangement for the system in the manner as described hereinabove allows the graphic processing to be implemented in combination with the operating and editing processing for operating and editing the card type data through the graphic processing means and the card type data processing means, provided in the command libraries, thereby implementing the graphic processing through the command libraries.

The card type data processing means is involved in fetching, for example, the graphical images and the text as display data in the button region on the card, and it allocates an instruction to operate the card and a sequence of the commands functioning as an operating procedure in the graphic processing system. Hence, the card type data processing means can carry out the operations for the various means of the command library, a macro language library, and a high-level interface language library, which are provided together with the means for operating the graphics and the graphical images, for the vector graphics and the graphical image data in substantially the same manner as is the operation for the card type data.

Therefore, as have been described hereinabove, the graphic processing system according to the present invention is so adapted as to implement the operating and editing of the vector drawings and the graphical image drawings, while operating the card type database. For example, an application of the card displaying function for a CAD assists in supporting operations, editing and making a search for CAD drawings, components, and so on, improving the help functions and the command functions, making the graphic processing operations more efficient, and saving laborious work needed to operate the system. Further, the user interface of the means for operating and editing the vector data and the graphical image data can be improved by using the card processing means so as to adapt them to the needs or preference of the user's own business.

Other objects, features and advantages of the present invention will become apparent in the course of the description of the preferred embodiments, which follows, with reference to the accompanying drawings.

### BRIEF DESCRIPTION OF THE DRAWINGS

Fig. 1 is a block diagram showing the configuration of an essential portion of an interactive CAD system according to an embodiment of the present invention.
Fig. 2 is a schematic representation showing a software configuration of the graphic processing system according to an embodiment of the present invention.
Fig. 3 is a schematic representation showing a card type data configuration to be manipulated by the card type data processing function of the graphic processing system according to the embodiment of the present invention.
Fig. 4 is a schematic representation showing the configuration of a card type data file.
Fig. 5 is a schematic representation showing an example of a data configuration to be applied when an instruction for operating a card is added to a graphic element on drawing data.

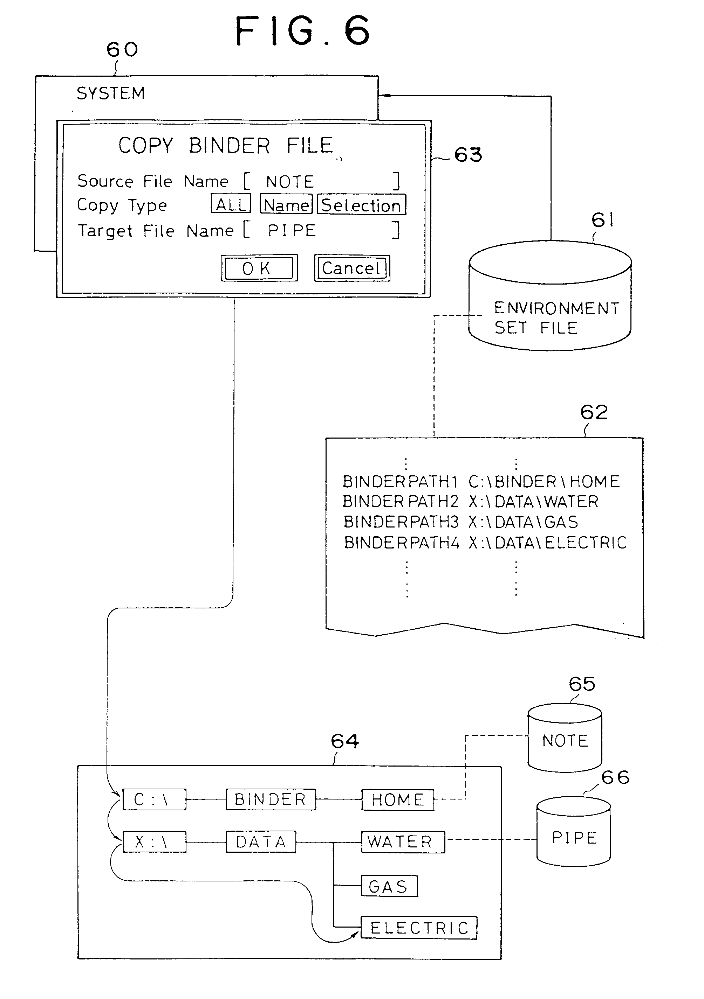

Fig. 6 is a schematic representation showing an example of a file configuration to be applied when a plurality of directories giving instructions indicative of locations of binder files are provided with the order of priority and managed.
Fig. 7 is a schematic representation showing an example of an application of a card to the communication of operation work by each operator, the card being provided with messages relating to each of the operations for the graphic processing in the graphic processing system.
Fig. 8 is a schematic representation showing an example of an application of a card to a search for drawings to be subjected to graphic processing in the graphic processing system.
Fig. 9 is a schematic representation showing an example of the processing for using a card as an icon menu by allocating graphic processing commands to a button on the card in the graphic processing system according to the embodiment of the present invention.
Fig. 10 is a schematic representation showing an example in which a card is employed for displaying a message of an on-line help of the graphic processing system and showing a processing flow for displaying the card displaying contents of a manual for operating with the help command when reference is to be made to the manual for operating commands.
Fig. 11 is a schematic representation showing an example of an application of a card to displaying a message of an on-line help of the graphic processing system and showing an example of a screen on which the card describing parameters is displayed when a function key functioning as a help key is pressed during the course of the input of commands for drawing dimension lines.
Fig. 12 is a schematic representation showing an example of an application of a card to the operation of the system by associating the card with the graphic elements on the screen.
Fig. 13 is a schematic representation showing functions of an AREAINFO command prepared by using the macro language library.
Fig. 14(A) shows an example encoding the AREAINFO command.
Fig. 14(B) is a flowchart showing the contents for processing the AREAINFO command.
Fig. 15 is a schematic representation showing functions of a FIGINFO command prepared in combination with functions of the high-level interface library.
Fig. 16(A) shows an example encoding the FIGINFO command.
Fig. 16(B) is a flowchart showing the contents for processing the FIGINFO command.

### DESCRIPTION OF THE PREFERRED EMBODIMENTS

The present invention will be described in detail with reference to the accompanying drawings.

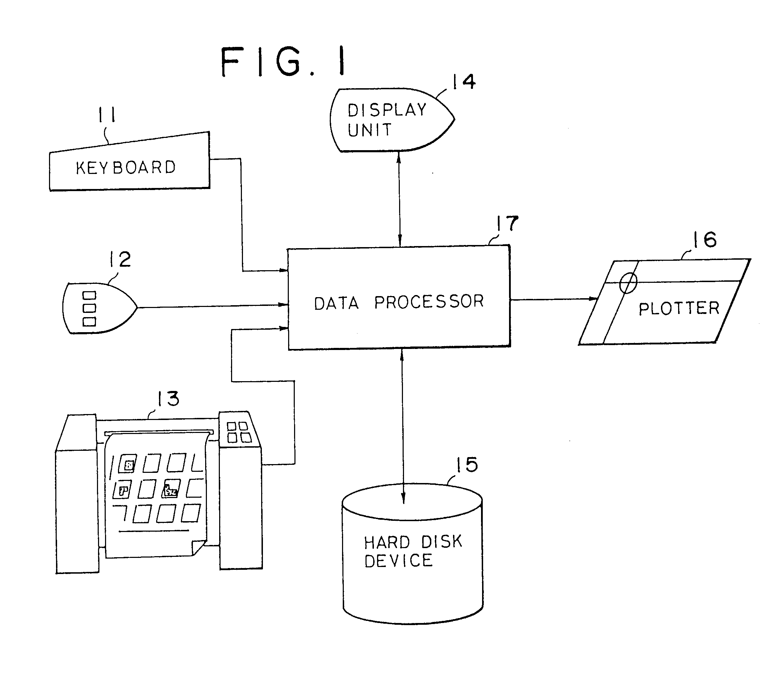

Fig. 1 is the block diagram showing the configuration of the essential portion of the interactive CAD system according to the embodiment of the present invention. In Fig. 1, reference numeral 11 stands for a keyboard; reference numeral 12 for a mouse; reference numeral 13 for a scanner; reference numeral 14 for a display unit; reference numeral 15 for a hard disk unit; reference numeral 16 for a plotter; and reference numeral 17 for a data processor. The hard disk unit 15 operates to store data such as drawings, components, card type data, and so on, and the plotter 16 is employed as an output device. The data processor 17 operates to implement data processing in the interactive CAD system and to perform various processing control.

The user enters data consisting of the name of a command and characters line from the keyboard 11 as well as it enters coordinates, it specifies a graphic, it enters a menu, it specifies a button of the card, and so on, from the mouse 12. Handwritten drawings and so on can be fetched as drawing files read in the hard disk unit 15 from the scanner 13. The data processor performs the data processing in accordance with the processing contents programmed in advance, edits processed data, such as graphic data, vector data, card data, and so on, and stores the data as files. The data contents as a result of the processing are printed out on paper with the plotter 16.

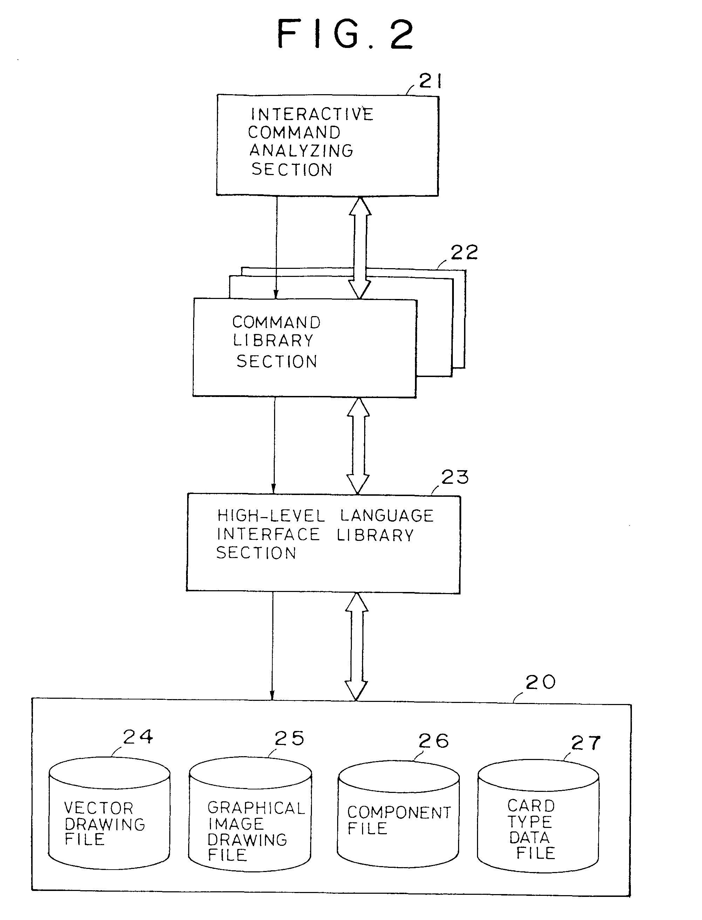

Fig. 2 shows the software configuration of the graphic processing system according to the embodiment of the present invention. As shown in Fig. 2, the software configuration as the system element of the graphic processing system has a hierarchical structure composed of three hierarchies. The uppermost hierarchy closest to the user side constitutes an interactive command analyzing section 21, including the user interface. The interactive command analyzing section 21 is arranged to implement the input processing for entering a command name, a parameter, and so on, to analyze the command, and to execute the command. A command library section 22 is composed of a plurality of independently executable modules to which the interactive command analyzing section 21 transmits an instruction of a result of its analysis, thereby starting each of the executable modules corresponding to the command and allowing the executable modules to execute various processing for operating the graphics and the graphical images, editing them, displaying the card, and so on. A high-level interface library section 23 is a library of a high-level language program for operating the vector graphic data and the graphical image data and the card data.

The functions of the library are utilized in the command, thereby making a request for access to each file of a group of files, 20, through each of the respective library sections, implementing the access processing for making access to files, such as vector drawings files 24, image drawings files 25, components files 26, card type data files 27, and so on, and executing the graphic processing and the graphical image processing in such a manner as being integrated with the user interface processing.

Then, a description will be made of the various functions of the libraries equipped in the graphic processing system according to the embodiment of the present invention. The functions of the basic command library, the macro language library, and the high-level language interface library will first be described.

### a. The various kinds of the commands are provided as the functions of the basic command library as will be described hereinafter.

### a-1. Display and Set Functions for Displaying and Setting Various Data

The display and set functions for displaying and setting various data may include functions for displaying and setting, and are adapted to display and set, lists of data of the vector drawings, current drawing attributes of colors, kind of lines, etc. of vector graphics, data of image drawings specified, and current drawing attributes of drawing widths and deleting widths, etc. of graphical images.

### a-2. Operating and Editing Functions for Operating and Editing Graphic Data

The operating and editing functions for operating and editing the graphic data may include, for example, functions for drawing pictures on the basis of vector graphics, such as bent lines, circles, ovals, arcs, dimension lines, etc. or for editing the selected graphic by deleting, elongating, moving, etc.

### a-3. Operating and Editing Functions for Operating and Editing Graphical Image Data

The operating and editing functions for operating and editing the graphical image data may include, for example, functions for drawing or erasing pictures on the basis of the graphical image data, or for editing the graphical image data by deleting the graphical image causing noises or by cutting, pasting, rotating, etc. the graphical image data.

### a-4. Trace Functions for Tracing Graphical Image Data

The trace functions are involved with functions for converting line images into polygonal graphics by tracing them in an interactive way and for tracing contour lines of a graphical image.

### a-5. Files Operating Functions for Operating Files

The files operating functions for operating files may include, for example, functions for operating files to load and save vector drawings and image drawings, to assign components files, to register and call components, and so on.

### a-6. Display Functions

The display functions may include, for example, functions for setting a window, a view port, or the like, and for displaying a vector drawing and an image drawing in a superimposed manner.

### a-7. Output Functions for Printing with Graphics Plotter

The output functions are involved with functions for making an inquiry about the graphics plotter, setting the control data, and printing a portion or an entire portion of a drawing with the graphics plotter.

### a-8. Card Display and Search Functions for Displaying and Searching for Card

The card display and search functions for displaying and searching for the card are involved with displaying, operating, and searching for the card in order to form, edit, and search for a card type database. The card display and search functions can save a graphical image as display data for the card and allocate graphic processing commands to a button on the card.

### b. Various basic processing functions are provided as processing functions for the macro language library as will be described hereinafter.

### b-1. Data Input/Output Functions

The data input/output functions for the macro language library are involved with inputting and generating data by the user.

### b-2. File Input/Output Functions

The file input-output functions are involved with opening, closing, reading and writing text files.

### b-3. Command Control Functions for Controlling Command Control Statements

The command control functions may include, for example, functions for controlling a flow of commands processing for executing command statements such as IF, FOR, WHILE, BREAK, and so on.

### b-4. Execution Functions for Executing Commands in Commands Library

The execution functions for executing commands in the commands library operates to execute commands on the basis of a CALL statement and to execute a sequence of commands in combination therewith.

### b-5. Display and Set Functions for Displaying and Setting Various Data

The display and set functions for displaying and setting various data are involved with inquiring about and setting data of vector drawings, current drawing attributes such as colors, lines of vector graphics, and data of image drawings specified.

### b-6. Functions for Arithmetic Operation

The functions for arithmetic operation may include, for example, functions for calculating the shape of a graphic, such as an intersecting point, a perpendicular line, and so on, in addition to arithmetic operation.

### c. Further, various functions are provided as the high-level language interface library as will be described hereinafter.

### c-1. Set and Inquiry Functions

The set and inquire functions may include functions for setting and inquiring about, and operate to set and inquire about, data of the vector drawings, current drawing attributes of colors, kind of lines, etc. of vector graphics, data of image drawings connected to the vector drawings specified, and current drawing attributes of drawing widths and deleting widths, etc. of graphical images.

### c-2. Data Editing Functions

The data editing functions are involved with editing vector graphic data and graphical image data by drawing or deleing a vector graphic or a graphical image.

### c-3. File Operating Functions

The file operating functions operate to load and save vector drawing data and image drawing data, to assign components files, to register and call components, to call a card from a card type database, and so on.

### c-4. Input Control Functions

The input control functions may include, for example, input control functions for controlling the input activity to input coordinates, numeric values, characters, graphics, and so on, the input activity from a button on a spreadsheet menu or a card, and so on, and the input activity for taking a snapshot of input points into terminal points of a vector graphic or a graphical image.

### c-5. Display Functions

The display functions may include, for example, functions for setting a window or a view port and displaying a vector drawing so as to be superimposed upon an image drawing, for displaying a card specified, and for making a conversion between the coordinate value of a vector drawing system and the coordinate value of an image drawing system.

### c-6. Selection Functions

The selection functions are involved with selecting and releasing a vector graphic.

### c-7. Output Functions to Graphics Plotter

The output functions may include, for example, functions for inquiring about data of a graphics plotter and for changing and transferring a pen.

### c-8. System Environment Set and Inquiry Functions

The system environment set and inquiry functions are involved with functions for setting and inquiring about a system environment, including, for example, setting and making an inquiry about data of the system and a memory size of the system to be employed in association with an image drawing, a path directory of a card type data file, an operating drive to be employed for various processing operations, and so on.

As the graphic processing system according to the present invention is provided with the commands for carrying out the various processing functions as functions for the basic command library, the macro language library, and the high-level language interface library, it can offer the same environment to the user as the system commands are prepared. Further, the graphic processing system according to the present invention allows the user to additionally prepare its own commands in such a manner as satisfying the performance and functions of the commands provided by the system, and to make access to various resources for the graphic processing system. This allows the operating and editing commands to be prepared so as to suit the needs or preference of the user by using the access functions in combination with the operating functions for operating the graphical image data and the vector graphic data when the user prepares its own commands by combining the functions provided for the libraries.

Now, a description will be made of the configuration of card type data to be manipulated with the card type data processing function in the interactive CAD system as the graphic processing system according to the embodiment of the present invention.

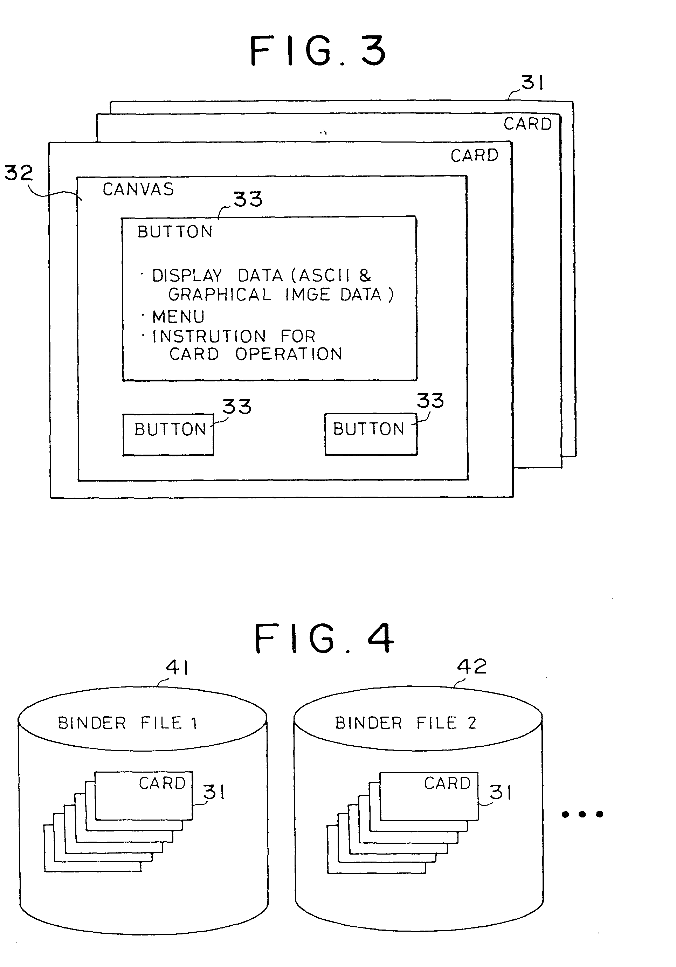

Fig. 3 shows the configuration of the card type data to be manipulated by the card type data processing function of the graphic processing system. As shown in Fig. 3, card type data 31 comprises a canvas 32 and a button region 33, i.e. a data structure in which the button region 33 is set in an arbitrary position on the canvas 32 defining data attributes of a card image. The canvas 32 is provided with attribute data defining a card size, card location and background color on a screen, and the button region 33 is provided with regional data defining display data, including graphical image data and a sequence of ASCII characters, as well as a menu or an instruction for operating the card.

The graphical image display data of the display data in the button region 33 is graphical image data for exclusive use with the button region, and the pixels of the graphical image display data are so arranged as to correspond to pixels on the screen on a one-to-one basis. The graphical image display data may be fetched into the button region by pasting the graphical image data cut and fetched from the graphical image data file or cut directly from the screen so as to be aligned on the button region.

The sequence of the ASCII characters in the button region 33 consists of alphanumeric data which in turn is provided for the button region. The ASCII data can be fetched as the display data in the button region from the ASCII file.

The menu in the button region 33 is intended herein to mean a group of commands that can be allocated to the button region of the area aligned in a predetermined position on the canvas 32. The allocated command of the command library can be executed by clicking the button region. Likewise, the instruction for operating the card set in the button region 33 is referred to as an instruction defining the procedure of operating the card. For example, by clicking the button set by the instruction for operating the card, another arbitrary card linked can be displayed or it can be erased from the screen.

Fig. 4 shows the configuration of the card type data file. As shown in Fig. 4, the card type file has a file configuration storing a plurality of card type data 31 and a binder file 41 which in turn is a unit for managing the plural card type data 31. One binder is so arranged as to correspond to one file in a management unit in a file control section; hence, the provision of different binders in accordance with purposes can effectively manage the data stored in the card. It is possible to adapt binder files to different usage: for example, a binder file 1 for card type data for the installation of water pipes; a binder file 2 for card type data for the installation of city gas pipes; and a binder file 3 for card type data for the installation of power transmission lines.

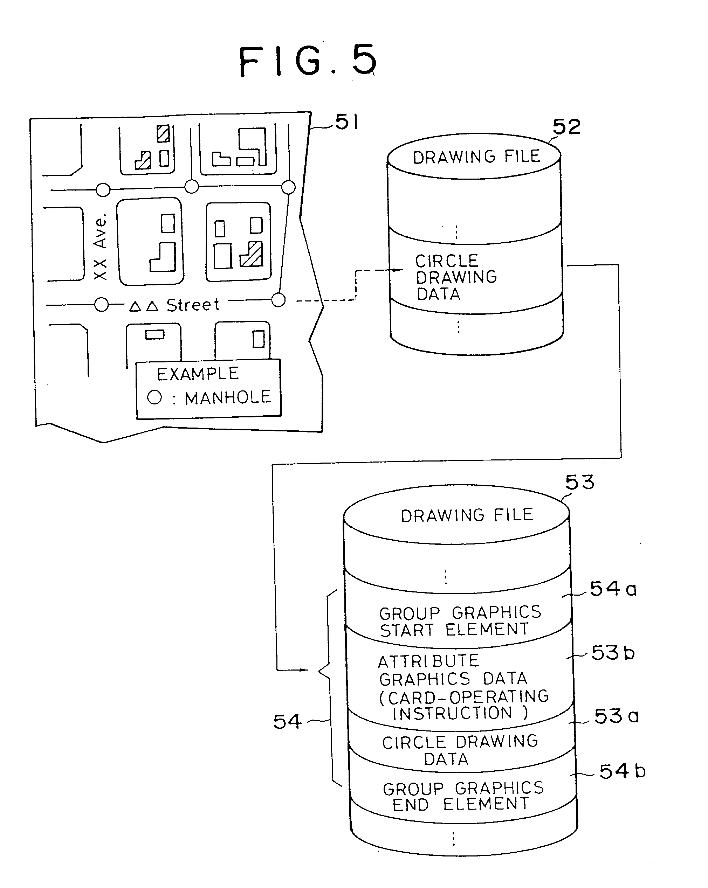

Fig. 5 shows an example of the data configuration to be applied when the instruction for operating a card is added to the graphic element on the drawing data. In order to link the drawing data to be manipulated in the graphic processing system with the card type data, the instruction for operating the card is manipulated as an attribute data graphic of a non-graphic in the same manner as a sort of graphic elements data, and the graphic elements are grouped to thereby add the instruction for operating the card, whereby the instruction is stored in the drawing file together with the graphic elements data. In Fig. 5, reference numeral 51 denotes drawing data representing a drawing image that is a portion of the contents of the drawing data. Each of the drawing elements data constituting the contents of the drawing data 51 and the other data are stored in a drawing file 52. For example, as shown in Fig. 5, circle graphic data 52a of the drawing data 51, which represents a manhole, for example, is stored in the drawing file 52 as the graphic elements data.

When the instruction for implementing the operation of the card is to be added to the circle graphic data 52a representing a graphic of the manhole, the instruction is manipulated as the attribute data graphic of a non-graphic in the same manner as the graphic elements data of a sort. For example, as shown in the data configuration of the drawing file 53, circle graphic data 53a and the attribute graphic data 53b, indicative of the instruction for implementing the operation of the card, are manipulated as a group graphics unit 54. The graphic elements data is grouped as the group graphics unit 54 by interposing it between a group graphics start element 54a and a group graphics terminal element 54b, thereby making it easy to add the instruction for operating the card to the graphic data and to store the instruction in the drawing data in such a type as similar to general graphic data.

Now, a description will be made of the file configuration when the plural directories giving instructions, indicative of the locations of the binder files, are provided with the order of priority and managed. The arrangement for the file configuration having the directory paths provided with the order of priority permits access to a card file with the locations of the binder files made unconscious, thereby releasing the user from inconvenience which is caused by specifying the directory. Hence, the graphic processing system according to the present invention is so arranged as for the names of the directory paths specifying the locations of the binder files to be set one after another in a data table 62 of an environment set file 61 in the order of priority. After the start of the system, the access to the binder file functioning as a card type database is made in accordance with the order of priority set for the directory paths in the data table 62. Hence, the user can be made access to an arbitrary binder merely by specifying the name of the binder without making the location of the binder conscious.

For instance, when a card type data contained in a binder file named as "NOTE" is to be copied on a binder file named as "PIPE", an instruction is given the binder file to copy the card type data by specifying the name of a source file "NOTE" and the name of a target file "PIPE" and giving an instruction to execute a command for copying the card type data. Then, a system processing section 60 makes reference to the data table 62 of the environment set file 61 and specifies the directory path, thereby giving a file access processing section 64 an instruction to implement the access processing. This instruction causes the file access processing section 64 to make a search for the directory paths one after another and to copy the card type data on the binder file "PIPE" 66, that exists by the name of the directory path "X:\DATA\WATER", from the binder file "NOTE" 65, that exists by the name of the directory path "C:\BINDER\HOME". By setting the plural directory paths specifying the locations of the binder files and managing them in the manner as described hereinabove, the file processing can be implemented merely by specifying the name of the binder file, for example, "NOTE" or "PIPE", without specifying the directory path, and releasing the user from inconvenience which may be caused by specifying the directory.

Further, a description will be made of an example of implementing the processing by making effective use of the card type data in the various processing, such as the processing for preparing, displaying, and searching for the card type data, with the aid of the card type data processing function equipped in the graphic processing system according to the embodiment of the present invention.

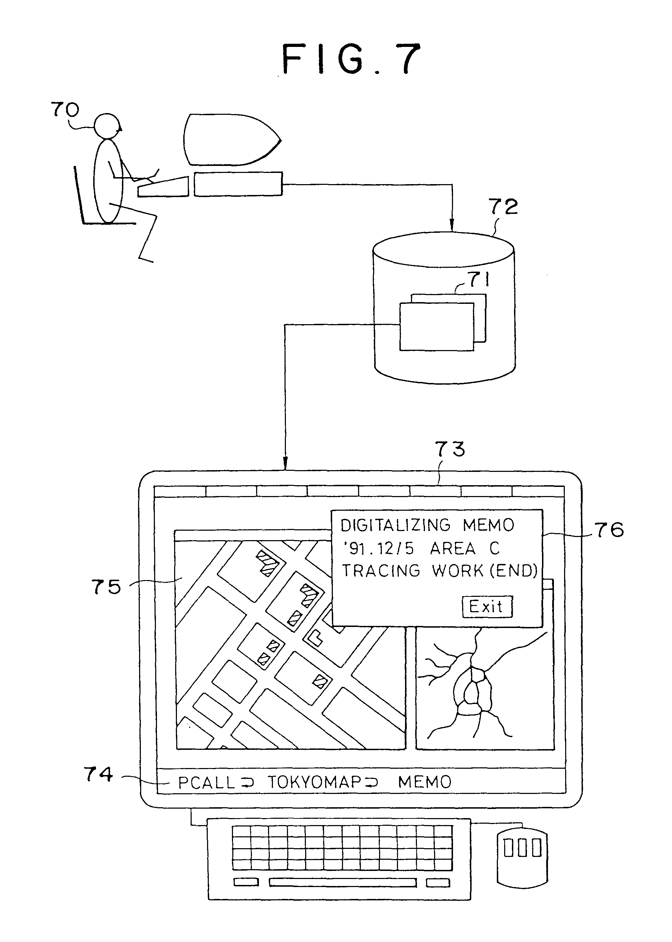

Fig. 7 shows an example of the application of the card to the communication of the operation work by each operator, the card being provided with messages relating to each of the operations for the graphic processing in the graphic processing system. As shown in Fig. 7, the operator 70 prepares a message card 71 describing the contents of the work at the time when the work is to be done and stores it in a data file 72. Then, another operator enters a PCALL command for displaying the card on a command input field 74 of a display screen 73 at the time when the operator is ready to start the work together with a command for executing the graphic processing, thereby executing the commands to read and display the message card 71 on the display screen 73, together with an operation region 75 for the graphic processing, and displaying the message card 71 as a display card 76. As the display card 76 is displayed on the screen 73, the operator can then implement the graphic processing work in a smooth fashion while looking at the operation message represented on the display card 76.

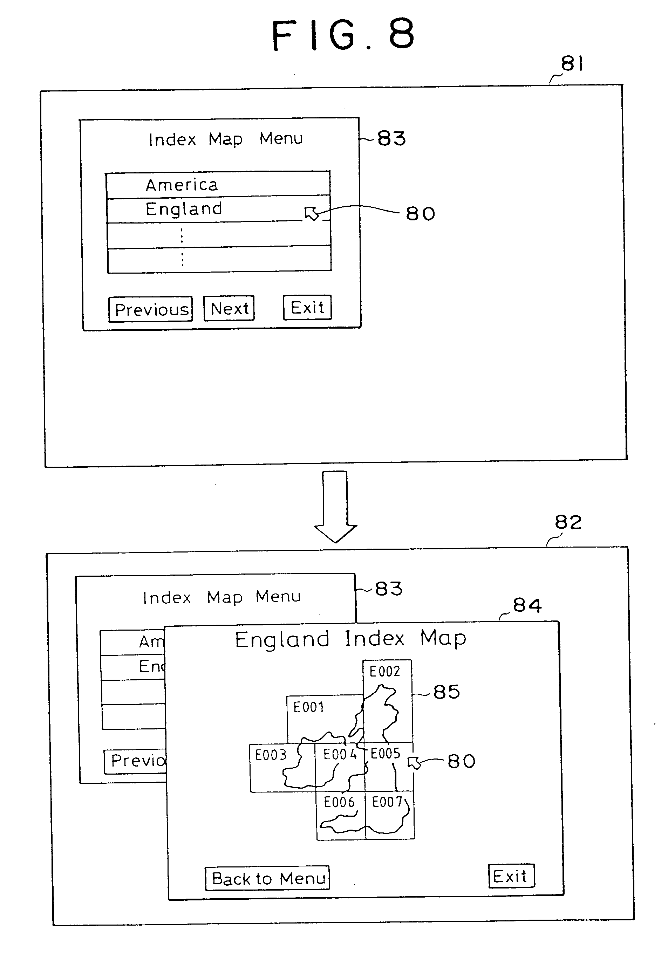

Fig. 8 shows an example of the application of the card to the search for a drawing to be subjected to graphic processing in the graphic processing system according to the embodiment of the present invention. When the card is applied to the search for the drawing, an index menu card 83, for example, indicative of an index manu of names of pictures, is formed in the manner as shown in Fig. 8. The index menu card 83 is so arranged as to correspond a display region for the names of the drawings on the card to a button region of the canvas, and an instruction for the implementation of the operation of the card to display a menu card for loading the corresponding drawing is embedded in the button region. Then, the name of an arbitrary drawing indicated on the index map menu card 83 displayed on the screen 81, as shown in Fig. 8, is specified by clicking a cursor 80 of the mouse, thereby displaying the card indicating the contents of the map, which serve as an index of the corresponding area. More specifically, as shown in Fig. 8, the mouse cursor 80 is moved to the position of the button region as indicated by the name "England" and the button of the mouse is clicked, thereby displaying an "England Index Map" menu card 84 on the display screen 82. Furthermore, a button region 85 in which a command for loading a detailed illustration of each of the areas of the map is allocated is disposed in the position corresponding to the location of the displayed area on the "England Index Map" menu card 84, thereby allowing the drawing of the corresponding area to be loaded and customizing the drawing load command of the system so as to suit the needs or preference of the user's own business. This arrangement for the system permits maps and so on to be manipulated with ease.

In addition, if an amount of data in an original drawing file, such as maps and so on, is voluminous when the drawing file is to be loaded in a map data system in order to make reference to an actual map, an extremely long period of time is required for loading; however, if the data in the drawing file is processed as the card type data as described hereinabove, the drawing of the map can be converted into card type data of a screen image. In this case, even if the amount of the data of the map drawing would be voluminous, the drawing data converted into the card type data does not exceed the number of pixels corresponding to a displayed portion of the display screen, thereby allowing the user to make reference to the contents of the map at an instance. This enables the user to pick up many maps in a simple way.

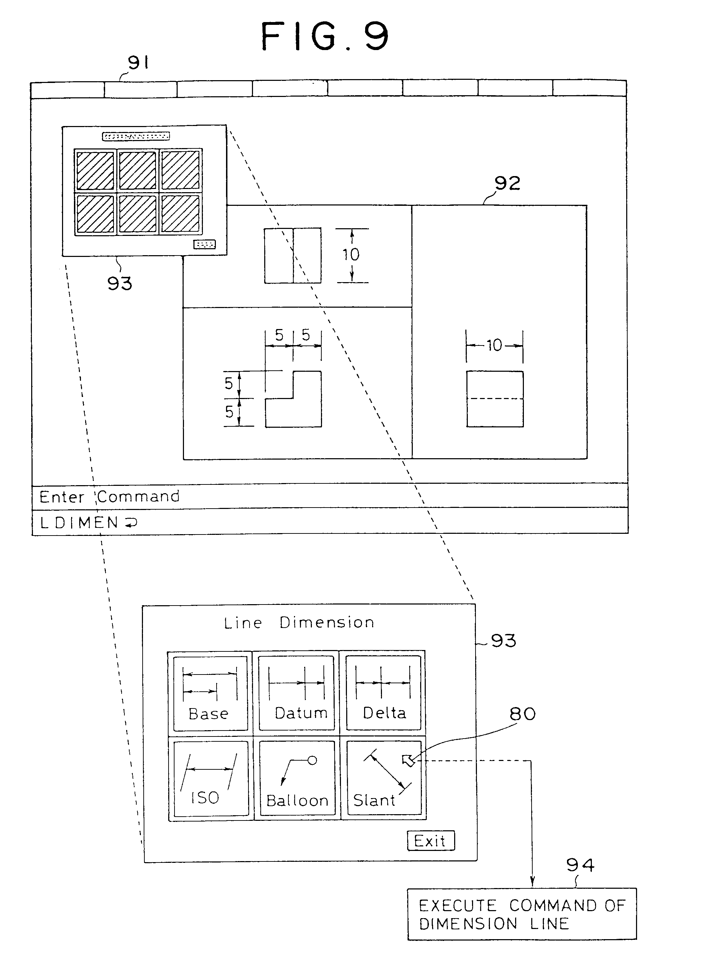

Reference is now made to Fig. 9 showing an example of the processing for using the card as an icon menu by allocating graphic processing commands to the button region on the card in the graphic processing system according to the embodiment of the present invention. A description will be made herein on an example of the processing for making the icon menu for a command for drawing a dimension line of the graphic processing commands. For instance, when it is intended to make an icon menu for the dimension line drawing command for drawing a layout of a drawing 92 displayed on the screen 91 as shown in Fig. 9, an icon menu card 93 is prepared in advance, for example, which indicates and allocates a drawing representing the contents of the dimension line drawing commands and the dimension line drawing commands corresponding to the displayed portions of the drawing as a button region. When the dimension line drawing command is to be executed in the graphic processing, the icon menu card 93 is first displayed on the screen 91, the mouse cursor 80 is then moved to the portion of the drawing representing the contents of the desired dimension line drawing command, and the button of the mouse is clicked to start the corresponding command, thereby executing the dimension line command as indicated by reference numeral 94. The icon menu is easier to distinguish a desired item from the other items than a text menu so that the use of the card as an icon menu for graphic processing commands can improve a user interface of the system. Further, the entity of the icon menu in this case is the card itself, so that it is extremely easy for the user to modify the icon menu of the commands, prepared by the user itself.

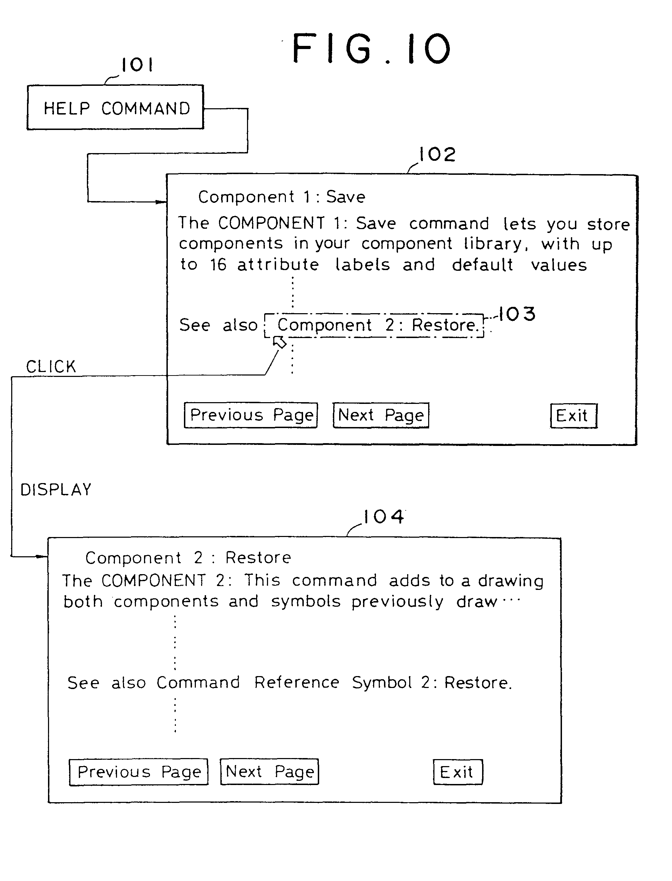

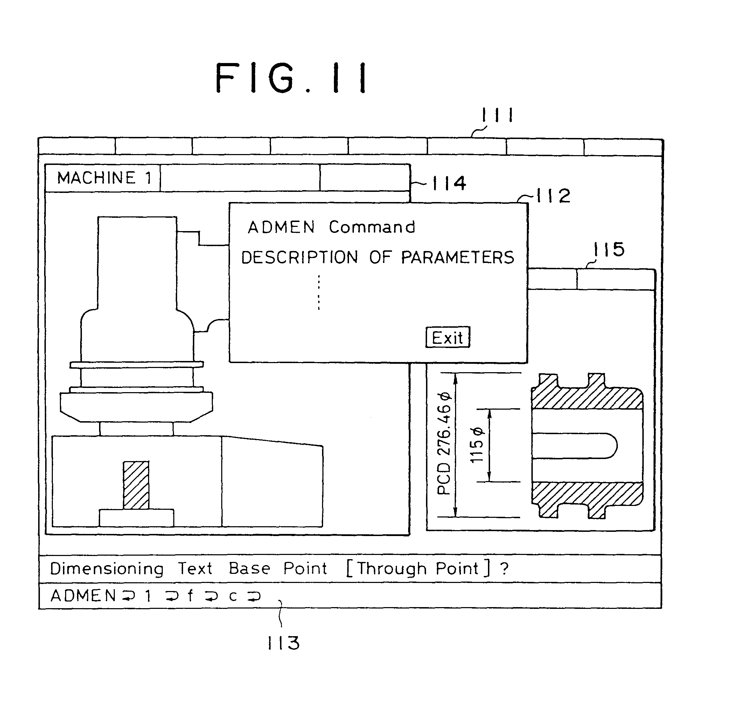

Figs. 10 and 11 show each an example in which the card is employed for displaying a message of an on-line help of the graphic processing system according to the embodiment of the present invention. Further, Fig. 10 shows a flow of the processing for displaying the card with the help command when reference is to be made to the operating manual for the commands, which indicates the contents of the operating manual for operating the commands, and Fig. 11 shows an example of the screen displaying the description card for describing the parameters when a help key is pressed through a function key during the course of the input of a parameter for the dimension line drawing commands. When the card type data is employed for representing an on-line help message, it is utilized in a manner similar to hypertext, by linking it to the display card to be further referred to during the course of making reference to a description card 102 for describing the operations of the commands for saving components with a help command 101, as shown in Fig. 10. In this case, the card may be prepared by setting a button region 103 and embedding an instruction for operating the card type data to display the description card 104 into a button region 103 in a text display area.

Further, as shown in Fig. 11, in instances where reference is made to the on-line help when the description of the parameters of the help command is made reference during the course of the input of the parameters of the graphic processing commands, the function key acting as the help key is pressed to display a description card 112 describing the parameters of the dimension line drawing commands, when the parameters are being entered. In Fig. 11, reference numeral 113 stands for a command input line, and reference numerals 114 and 115 stand each for an operation region for the graphic processing. By displaying the card with help information on the screen, the names of the commands and the parameters can be entered with reference to the information of the card displayed, thereby improving the operability of the system.

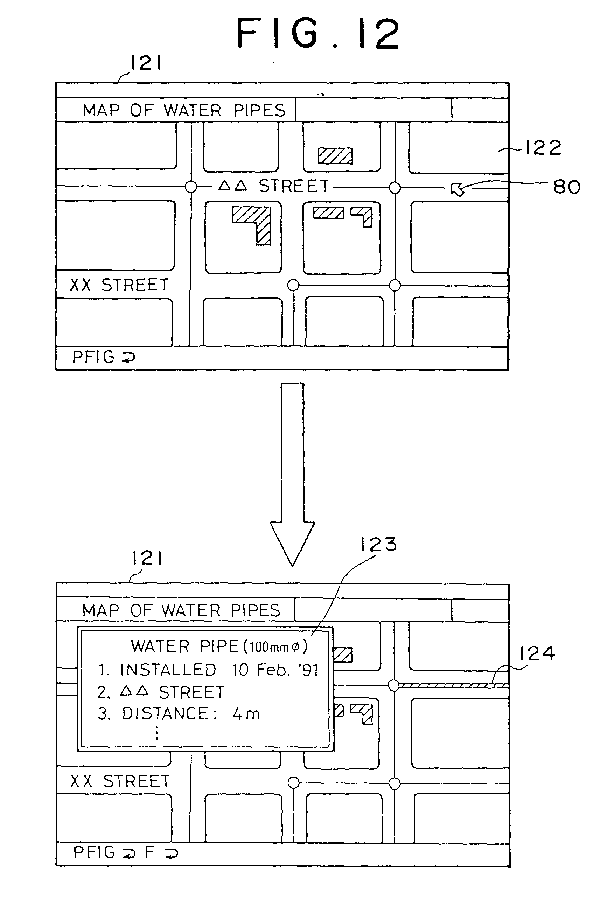

Fig. 12 shows an example of the application of the card to the operation of the system by associating the card with the graphic elements on the screen. As shown in Fig. 12, a description card 123 describing details of a drawing is provided corresponding to each of the graphic elements in a drawing 122 displayed on a display screen 121. For example, in a map system describing water pipes as shown in Fig. 12, a line indicating a water pipe, displayed on a street on the drawing 122 displayed on the screen 121, is specified with the mouse cursor 80 and the mouse button is clicked to specify the drawing, thereby displaying the description card 123 describing information relating to the drawing 124 specified, together with the drawing 124 in which the colors displayed are changed.

As described hereinabove, reference can be made to detailed information on the graphic on the display screen to be manipulated by the graphic processing system by linking the graphic to the card functioning as an auxiliary device for describing the graphics. This reference can permit effective reference to the information relating to equipment on a basic map.

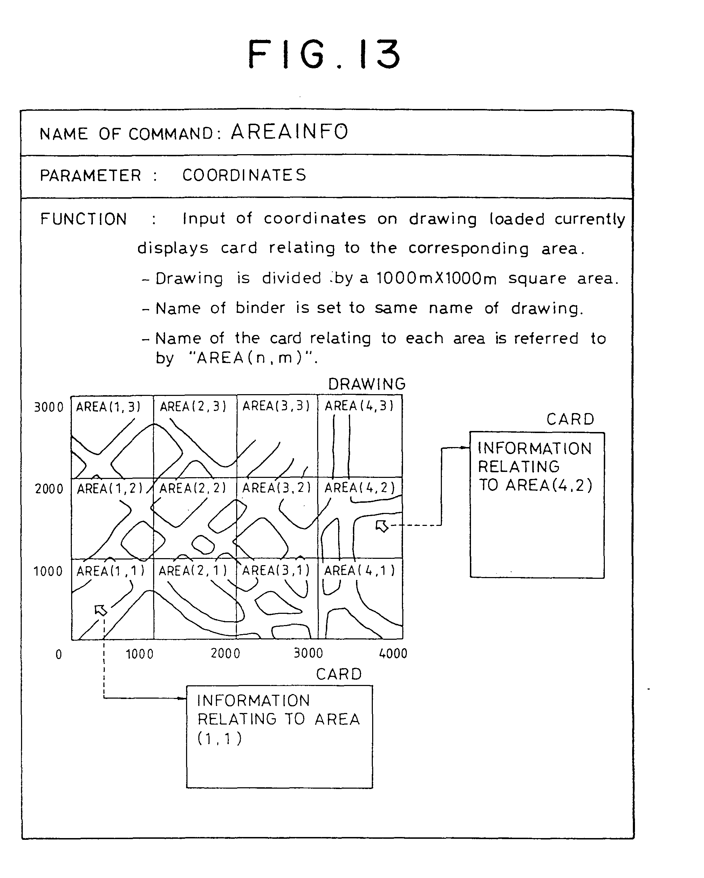

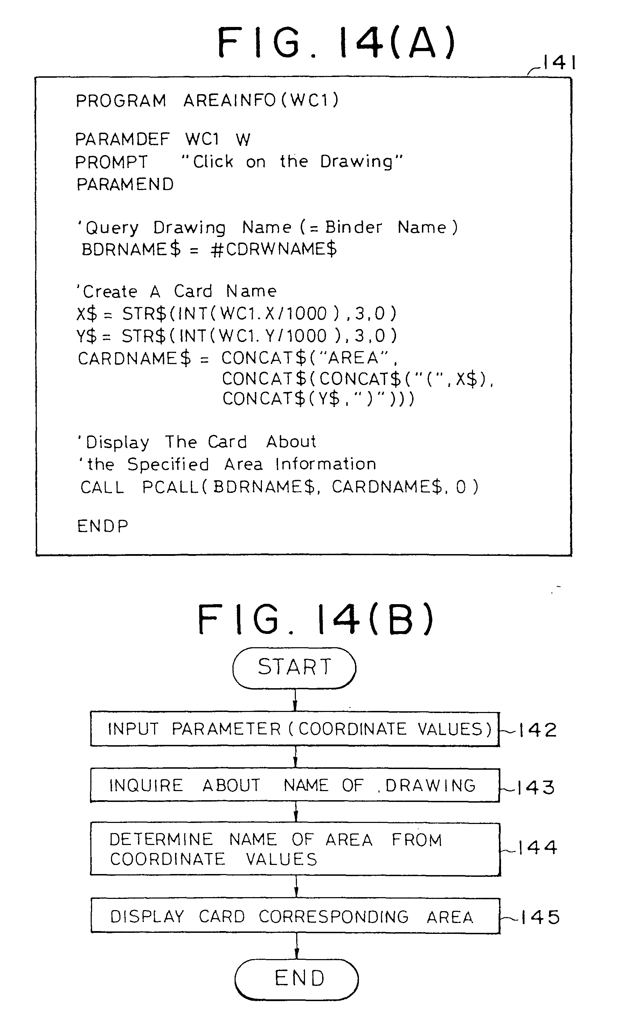

A description will be made of an example of the graphic processing commands prepared by using the macro language library for the graphic processing system according to the embodiment of the present invention. Fig. 13 shows the functions of an AREAINFO command prepared by using the macro language library. The AREAINFO command is a command of the macro language library for displaying the card with information relating to a regional area by entering a point on the drawing. Figs. 14(A) is an example of encoding the AREAINFO command, and 14(B) is the flowchart showing the contents for processing the AREAINFO command.

The AREAINFO command is a command for implementing the processing with the processing functions of the commands prepared with the macro language on the basis of the card with information relating to each of the regions of the drawing stored therein. The command processing is involved in entering the position of the coordinates on the drawing with a pointing device such as a mouse, specifying the card with the information on the region specified by entering the position of the coordinates, and displaying the card on the display screen. As shown in Fig. 13, the function of the AREAINFO command is the processing function for displaying the card relating to the area involved by entering the coordinates on the drawing loaded currently. When it is supposed that the screen is divided into rectangles each corresponding to a 1,000 m x 1,000 m area, that the binder is provided with the same name of the drawing, and that the name of the card relating to each of the areas is indicated by AREA(n, m), the processing for implementing the command presenting the functions as described hereinabove is executed, for example, as shown in the flowchart of Fig. 14(B).

First, at step 142, the parameters of the coordinate value are entered, followed by proceeding to step 143 at which an inquiry is made about the name of the drawing. Then, at step 144, the name of the area is given from the coordinate value and, at step 145, the card corresponding to the name of the region given at step 144 is displayed on the screen. The example of the codes, as indicated by reference numeral 141, is given as shown in Fig. 14(A), when the commands are encoded in the manner as shown in the processing flow as described hereinabove.

It can be noted herein that the graphic processing functions can be combined with the card display functions by displaying the card in combination with the commands and so on with the macro language library, thereby providing the commands in such a state as suiting the needs or preference of the user's own business.

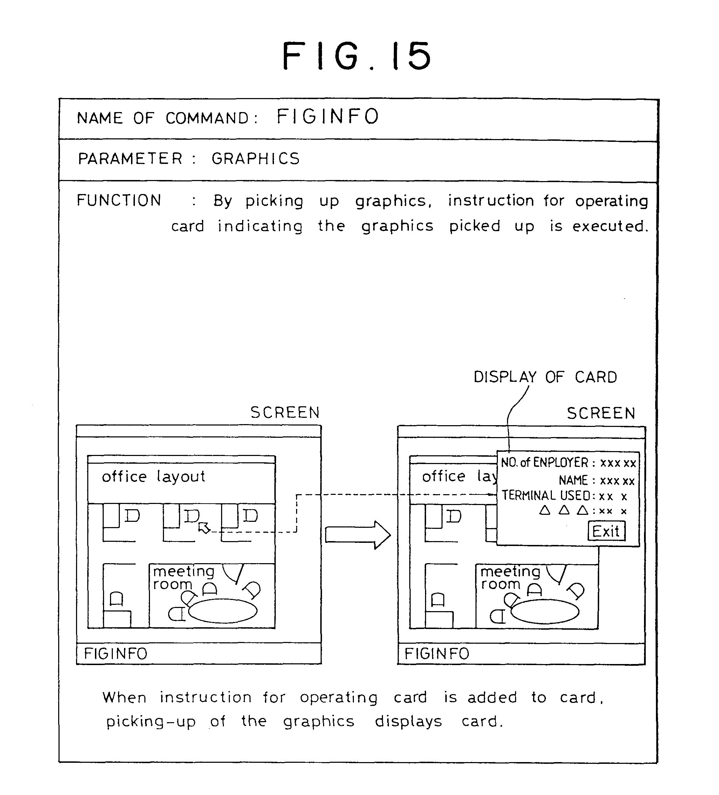

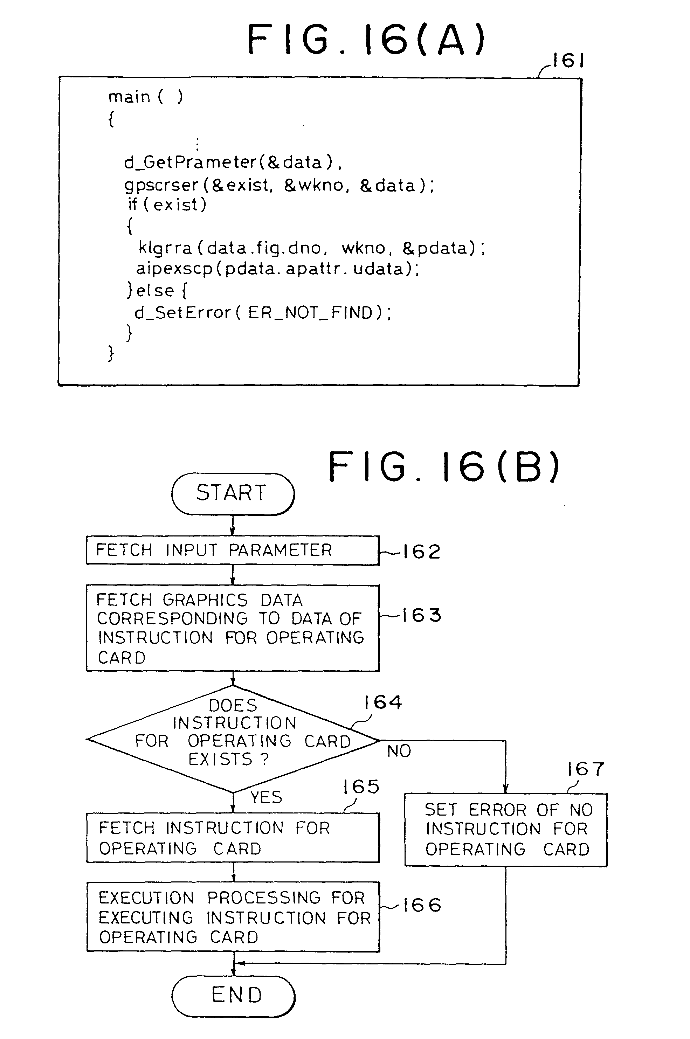

Then, a description will be made of an example of the application of the high-level language interface library to the preparation of the graphic processing commands. The following is a description of an example of the graphic processing commands prepared through the high-level language interface library in the graphic processing system according to the embodiment of the present invention. Fig. 15 shows the functions of the FIGINFO command prepared in combination with the functions of the high-level interface library. The FIGINFO command is a command for executing the instruction for operating the card, which is added to the graphic picked up on the screen. Fig. 16(A) shows an example in which the FIGINFO command is encoded, and Fig. 16(B) is the flowchart showing the contents for processing the FIGINFO command.

Now, a description will be made of the flow of the processing with the FIGINFO command with reference to the flowchart as shown in Fig. 16(B). First, at step 162, the fetch processing is implemented for fetching the parameters of the command. The function for implementing the fetch processing is referred to as "d - GetParameter", followed by proceeding to step 163 at which an inquiry is made about a graphic number of data on the instruction for operating the card, added to the graphic. The function corresponding to the inquiry processing is referred to as "gpscrser". Then, at step 164, it is confirmed to determine if the graphic with the fetched graphic number is provided with the instruction for implementing the operation of the card. When it is confirmed at step 164 that the graphic is provided with the instruction for operating the card, on the one hand, then the program flow goes to step 165 at which the instruction for operating the card, which is stored in a portion of the graphic data, is fetched from the graphic data of the graphic with the graphic number specified. In this case, the instruction is fetched as a graphic. The function for fetching the instruction is referred to as 'klgprra'. Then, at step 166, the instruction for carrying out the operation of the card is executed, thereby displaying the card specified by the instruction. The function for executing the instruction to carry out the operation of the card is referred to as 'aipexscp'. When it is confirmed at step 164 that the graphic is not provided with the instruction for carrying out the operation of the card, on the other hand, then the program flow goes to step 167 at which an error is set to the effect that there is no instruction to carry out the operation of the card. The function for setting the error to the effect that no instruction is provided is referred to as 'd_SetError'. The encoding of the FIGINFO command for implementing the graphic processing, including the operation of the card, may be described in combination with the aforesaid functions of the high-level language interface library. The graphic processing command in combination with the instruction for implementing the operation of the card type data processing functions can be prepared in the same manner as described hereinabove.

By preparing the command in the combination of the function for operating the card with the various functions for manipulating the graphical images, graphics, and components by the high-level language interface library, the graphic processing command can be prepared with the function for displaying the card provided in such a form as suiting the needs or preference of the user's own business.

As described hereinabove, the graphic processing system according to the embodiment of the present invention is provided with the command libraries having the functions for preparing, searching for, and displaying the card type data on the system which has the graphical image memory for storing the graphical image, the data memory for storing the vector graphic data, the display unit for displaying the graphical image data and the vector graphic data, and the input device for giving an editing instruction for editing the graphical image data and the vector graphic data, and which displays the graphical image data and the graphic data in a superimposed manner as well as operates and edits them. Hence, the graphic processing system according to the present invention allows the card type data to be operated and edited on the system and the resources to be manipulated with the graphic processing system to be managed with ease.

It can be noted herein that the feature of the graphic processing system according to the present invention resides in the fact that there is arbitrarily disposed a button region on the canvas, indicative of the region where the card itself exists, the button region being so adapted as to allocate the instruction for operating the card and a sequence of the commands as the operating procedures in the graphic processing system. The button region can be displayed on the card with the aid of the graphical image data and the ASCII text; hence, the operator can readily acquire the related information on the graphic processing operations merely by clicking the button region defined in advance on the card, without specifying the name of the card at which the operator intends to look, the execution commands, and the parameters, thereby operating and editing the CAD screen as well as searching for the graphic. This function can make the graphic processing operations more efficient and save the laborious work.

The button region on the card may be arranged in such a manner that an arbitrary portion is cut directly from a screen image under operation of the graphic processing system and fetched as the contents of the display of the button and that the contents of the display are fetched from the graphical image files as well. For instance, the graphic processing system according to the present invention allows such an arbitrary portion to be cut directly from the screen on the graphic processing system and the display drawing or the like to be fetched as the contents of the display of the button region, thereby preparing the card for managing the information on the drawings, components, and so on, with ease and managing the information thereon through the card in a ready manner.

Further, the card may be prepared and employed as the icon menu by fetching the graphical image and the text as the display data in the button region on the card and allocating the instruction for operating the card and the sequence of the commands as the operating procedures through the graphic processing system. In addition, an instruction for operating the card is added as the graphic data for each of the graphics on the drawing to be manipulated and the graphic data is registered in the drawing, thereby linking the graphic data on the drawing to the card with the information relating thereto. This link can represent the information on the details of each of the graphic data on the drawing in a definite way, thereby allowing the user to readily recognize the information on the details of each of the graphics on the drawing displayed on the screen.

In the control of the files with the graphic processing system according to the present invention, a plurality of the directories are set at the time of the start of the system with the order of priority allocated thereon, a directory being provided with a binder file in which a bundle of the cards is stored. The arrangement allow the directory to be divided in accordance with the contents of the card, thereby managing the card in an efficient fashion. Further, a search for the card can be made in the order of paths which have been set automatically, so that it is not necessary to specify the name of the binder file with the name of the path and, as a result, the card specified can be searched for and displayed without making the location of the binder file conscious at the time of searching for the card.

In addition to the processing functions, i.e. the vector functions and the graphical image processing functions, equipped in advance in the graphic processing system according to the present invention, the graphic processing system according to the present invention allow the functions for operating the card to be provided as the macro language library, thereby enabling the user itself to prepare the user's own commands which associate the functions for operating and editing the vector graphic data and the graphical image data with the operation of the card, by combining the functions of the macro language library in a macro language program and by combining the commands of the basic command library. The commands prepared independently by the user itself are registered additionally and they can be employed in substantially the same manner as can the other commands. Further, the functions for operating the card may likewise be provided as the high-level language interface library in addition to the vector functions and the graphical image processing functions, so that the instruction for operating the card can be programmed in combination with the functions of the high-level language interface library. This arrangement allows the user itself to prepare the user's own commands which enable the functions for operating and editing the vector graphic data and the graphical image data to be associated with the operations of the card. The commands prepared independently by the user itself can be registered additionally and can be employed in substantially the same manner as can the other commands.

As described hereinabove, the graphic processing system according to the present invention can offer the advantages, for example, as will be briefly summarized hereinafter.
1. As the graphic processing system according to the present invention provides the commands for editing, searching for, and displaying the card as the commands on the graphic processing system, the CAD drawing and so on can be searched for and operated with ease, thereby making the management of information on the drawings, components and so on easier, making the operations more efficient, and saving the laborious work.
2. The screen image can be fetched in the button region on the card during the course of the graphic processing operations, so that the information on the drawings, components and so on can be displayed through the card, thereby making the work more efficient and permitting a support for the management of various data.
3. As the card can be employed as the icon manu, interfaces of the commands provided by the system itself and the commands prepared by the user can be employed readily for user's own business.
4. Further, the instruction for operating the card can be added as the graphic data to each of the graphics on the drawing and it can be registered in the drawing, so that the graphic data on the drawing can be linked to the card with the information relating thereto. This arrangement permits a clear representation of the information on the details of each of the graphic data on the drawing and allows the user to recognize the information on the details thereof for each of the graphics on the drawing.
5. In addition, the user can make a program by combining the functions of the macro language library or the high-level language interface library, provided by the system itself, so that the commands for manipulating both of the vector graphic data and the graphical image data can be prepared with ease, the commands including the instruction for operating the card. Hence, the amount of work for programming for the preparation of the commands can be made smaller and, therefore, the commands can be formed as the system commands, in such a manner as adapted to suit the needs or preference of the user's own business and to satisfy substantially the same performance as the system commands provided by the system itself.

## Claims

1. A graphic processing system for performing graphic processing, having a graphical image memory for storing graphical image data; a data memory for storing vector graphic data; a display unit for displaying vector graphic data and graphical image data; and an input device for providing an instruction to operate and edit a vector graphic and a graphical image, said graphic processing system comprising:
a graphic processing means for displaying the graphical image data and the vector graphic data in a superimposed manner and for operating and editing the graphical image data and the vector graphic data in a command library;
a card type data processing means for designing a card type data of a card type database composed of a graphical image and text, for searching the card type data and for displaying the card type data in the command library; and
wherein the graphic processing is implemented in combination with the operating and editing processing for operating and editing the card type data through the processing means equipped in the command library.

2. A graphic processing system as claimed in claim 1, wherein said card type data processing means further comprises a card forming means for forming the card by fetching the graphical image and text as display data in a button region on the card and by allocating an instruction for operating the card and a sequence of a command as a procedure for operating the graphic by the graphic processing means.

3. A graphic processing system as claimed in claim 1, wherein said card type data processing means further comprises a card editing means for editing the card, which allows a button region to be disposed in an arbitrary position on a canvas indicative of a region in which card type data itself exists, said button region being arranged so as to allocate an instruction for operating the card and a sequence of commands functioning as a procedure for operating the graphic by the graphic processing means.

4. A graphic processing system as claimed in claim 3, wherein said button region on the card is fetched as contents of display on a screen by cutting an arbitrary portion of a screen image under operation of the graphic processing system directly from the screen.

5. A graphic processing system as claimed in claim 1, wherein said card type data processing means further comprises an icon forming means for forming the card as an icon menu by fetching the graphical image and the text as the contents of display of a button region on the card, allocating an instruction for operating the card and a sequence of commands functioning as a procedure for operating the graphic by the graphic processing means, and converting the card into the icon menu.

6. A graphic processing system as claimed in claim 1, wherein said card type data processing means further comprises a card linking means by adding an instruction for operating the card relating to each of the graphics on the drawing to be manipulated, together with the graphical data, and registering said instruction in drawing data and the graphical data, and linking the graphic data on the drawing to the card with information relating thereto.

7. A graphic processing system as claimed in claim 1, wherein said card type data processing means further comprises a card managing means for managing the card by setting a plurality of binder files in each of which a bundle of cards is stored in accordance with the contents of each of the cards, by classifying directories, each indicating locations of the binder files, by setting a plurality of the directories with the order of priority at the time of start of the system, and by managing each of the cards on the basis of the contents of each of the cards with the aid of the corresponding directory.

8. A graphic processing system as claimed in claim 1, wherein:
a vector graphic processing means, a graphical image processing means, and a card type data processing means for operating the card are provided as a macro language library;
a user command is prepared in a sequence of macro instructions by combining each of said processing means with a function of a macro language library, said user command associating means for operating and editing the vector graphic data and the graphical image data with an operation of the card; and
the user command is registered additionally in a command library.

9. A graphic processing system as claimed in claim 1, wherein:
a vector graphic processing means, a graphical image processing means, and a card type data processing means for operating the card are provided as a high-level language interface library;
a user command is prepared by making a program in combination with functions of the high-level language interface library, said user command associating means for operating and editing the vector graphic data and the graphical image data with an operation of the card; and
the user command is registered additionally in a command library.
